# EUROPEAN PATENT SPECIFICATION

(11) **EP 2 914 816 B1**
(45) Date of publication and mention of the grant of the patent: **05.12.2018**
(21) Application number: 13851734.7
(22) Date of filing: 30.10.2013
(51) Int. Cl.: F01D 11/08, F01D 5/20, F02C 7/00, F01D 9/04

(54) **BLADE OUTER AIR SEAL**
AUSSENLUFTDICHTUNG FÜR EINE TURBINENSCHAUFEL
JOINT À AIR EXTERNE DE PALE

(30) Priority: 05.11.2012 US 201213668398
(43) Date of publication of application: 09.09.2015
(73) Proprietor: United Technologies Corporation, Farmington, CT 06032 (US)
(72) Inventor: ROMANOV, Dmitriy A., Wells, Maine 04090-2848 (US); DUGUAY, Brian, Berwick, Maine 03901 (US); KEENE, Russell E., Arundel, Maine 04046 (US)
(74) Representative: Dehns
(86) International application number: PCT/US2013/067377
(87) International publication number: WO 2014/070817

(56) References cited:
- EP-A2- 1 905 958
- EP-B1- 0 623 189
- WO-A1-94/12775
- US-A- 5 092 735
- US-A1- 2008 211 192
- US-A1- 2011 044 802
- US-B1- 7 665 962
- US-B1- 7 704 039

## Description

### BACKGROUND

The invention relates to gas turbine engines, and more particularly to blade outer air seals (BOAS) for gas turbine engines as shown for example in EP 1905958.

Gas turbine engines operate according to a continuous-flow, Brayton cycle. A compressor section pressurizes an ambient air stream, fuel is added and the mixture is burned in a central combustor section. The combustion products expand through a turbine section where bladed rotors convert thermal energy from the combustion products into mechanical energy for rotating one or more centrally mounted shafts. The shafts, in turn, drive the forward compressor section, thus continuing the cycle. Gas turbine engines are compact and powerful power plants, making them suitable for powering aircraft, heavy equipment, ships and electrical power generators. In power generating applications, the combustion products can also drive a separate power turbine attached to an electrical generator.

The BOAS as well as turbine vanes are exposed to high-temperature combustion gases and must be cooled to extend their useful lives. Cooling air is typically taken from the flow of compressed air. Therefore, some of the energy that could be extracted from the flow of combustion gases must instead be expended to provide the compressed air used to cool the BOAS as well as the turbine vanes. Energy expended on compressing air used for cooling the BOAS and turbine vanes is not available to produce power. Improvements in the efficient use of compressed air for cooling the BOAS and turbine vanes and/or materials that can better withstand the turbine operating environment can improve the total efficiency of the turbine engine and extend the operational life of the BOAS.

### SUMMARY

A blade outer air seal for a gas turbine engine includes a first side surface, a second side surface, and a wall. The wall extends between the first side surface and the second side surface and has one or more holes formed therein. The holes are spaced from the first side surface and/or the second side surface and each of the one or more holes has an area between about 0.005% and 0.450% of a surface area of the blade outer air seal.

The blade outer air seal for a gas turbine engine includes a first side surface, a second side surface, a wall, and one or more forward hooks. The one or more forward hooks extend from the wall and at least one of the hooks has a slot therein that is offset relative to an axis of symmetry of the blade outer air seal.

A turbine section of a gas turbine engine includes an engine case, a support connected to the engine case, and a blade outer air seal. The blade outer air seal is mounted to the support and has a wall with a bond coat and a thermal barrier coating. Both the bond coat and the thermal barrier coating have a radial thickness between 3% and 10% of the total radial thickness of the wall.

### BRIEF DESCRIPTION OF THE DRAWINGS

FIG. 1 is a partial cross-sectional view of an exemplary gas turbine engine.
FIG. 2 is an enlarged view of a turbine portion of the gas turbine engine shown in FIG. 1 with a BOAS mounted therein.
FIG. 3 is a perspective view of one embodiment of the BOAS.
FIG. 4 is a plane view of the outer radial surface of the BOAS of FIG. 3.
FIG. 4A is a cross-sectional view of the BOAS of FIG. 4.

### DETAILED DESCRIPTION

The present invention provides a BOAS design with higher convective efficiency and with improved durability due to improved corrosion and oxidation resistance. More particularly, the BOAS described herein utilizes optimally sized holes in an outer diameter surface of a wall and optimally sized passages within the wall to better control cooling air flow through the BOAS and thereby improve convective efficiency of the BOAS. These features improve the operational longevity of the BOAS. Additionally, the BOAS is adapted with features such as a non-symmetric slot and an angled hook wall that extends radially and axially to aid in assembly of the BOAS within a gas turbine engine.

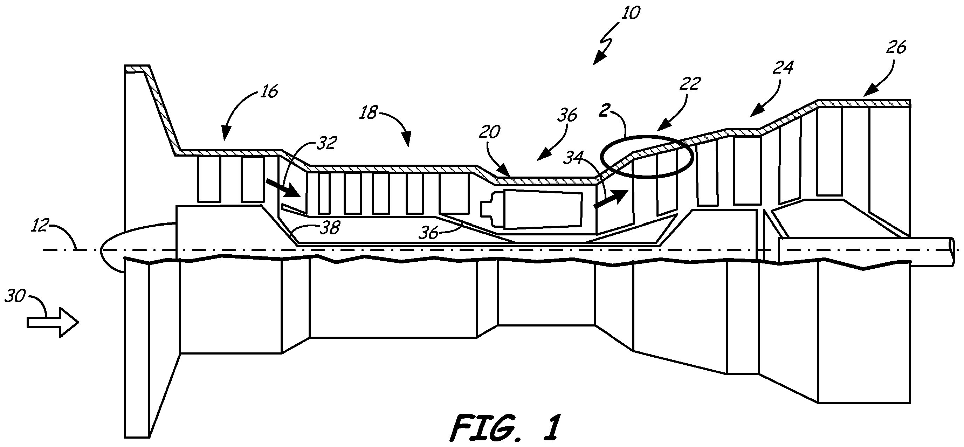

An exemplary industrial gas turbine engine 10 is circumferentially disposed about a central, longitudinal axis or axial engine centerline axis 12 as illustrated in FIG. 1. The engine 10 includes in series order from front to rear, low and high pressure compressor sections 16 and 18, a central combustor section 20 and high and low pressure turbine sections 22 and 24. In some examples, a free turbine section 26 is disposed aft of the low pressure turbine 24. Although illustrated with reference to an industrial gas turbine engine, this application also extends to aero engines with a fan or gear driven fan, and engines with more or fewer sections than illustrated.

As is well known in the art of gas turbines, incoming ambient air 30 becomes pressurized air 32 in the compressors 16 and 18. Fuel mixes with the pressurized air 32 in the combustor section 20, where it is burned. Once burned, combustion gases 34 expand through turbine sections 22, 24 and power turbine 26. Turbine sections 22 and 24 drive high and low rotor shafts 36 and 38 respectively, which rotate in response to the combustion products and thus the attached compressor sections 18, 16. Free turbine section 26 may, for example, drive an electrical generator, pump, or gearbox (not shown).

It is understood that FIG. 1 provides a basic understanding and overview of the various sections and the basic operation of an industrial gas turbine engine. It will become apparent to those skilled in the art that the present application is applicable to all types of gas turbine engines, including those with aerospace applications.

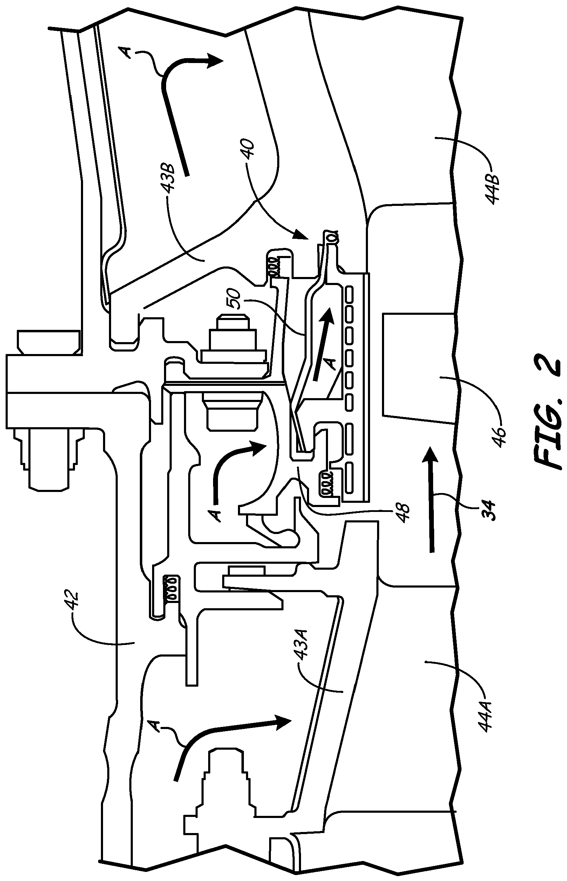

FIG. 2 is an enlarged view of a turbine section 22 and/or 24 of gas turbine engine 10 shown in FIG. 1 with a blade outer air seal (BOAS) 40 disposed adjacent a turbine rotor blade 46. FIG. 2 illustrates BOAS 40, an engine case 42, stator vanes 44A and 44B, rotor blade 46, a BOAS support 48, and a band segment 50. Vanes 44A and 44B include platforms 43A and 43B.

BOAS 40 comprises an arcuate shroud segment with an inner diameter wall forming the outer diameter of the engine flow path through which combustion gases 34 pass. As will be discussed subsequently, passages (not numbered) extend through at least a portion of wall of BOAS 40 to provide for cooling of BOAS 40 during operation. BOAS 40 is mounted within engine case 42 by forward and aft hooks, which engage BOAS support 48 and vane platform 43B, respectively. BOAS support 48 and vane platforms 43A and 43B are in turn connected to engine case 42. Band segment 50 is positioned radially outward of BOAS 40 and extends between BOAS support 48 and vane platform 43B. Conformal seals such as w-seals are disposed between vane platform 43B, BOAS support 48, and BOAS 40.

Rotor blade 46 comprises a single blade in a rotor stage disposed downstream of combustor section 20 (FIG. 1). The rotor stage extends in a circumferential direction about engine centerline axis 12 (FIG. 1) and has a plurality of rotor blades 46. During operation, combustion gases 34 pass between adjacent rotor blades 46 and pass downstream to stator vane 44B. Rotor blade 46 is disposed radially inward of BOAS 40, with respect to engine centerline axis 12 as shown in FIG. 1.

Stator vanes 44A and 44B are disposed axially forward and rearward of BOAS 40, respectively. Like the rotor stage, the stator stages (of which vanes 44A and 44B are a part) extend in a circumferential direction about engine center line axis 12, and each stage has a plurality of stator vanes. Vanes 44A and 44B include outer diameter platforms 43A and 43B, respectively. Platforms 43A and 43B include features that facilitate the mounting stator vanes 44A and 44B to engine case 42.

In operation, the flow of combustion gases 34 impinges upon vanes 44A and 44B and is aligned for a subsequent rotor stage. As the flow of combustion gases 34 passes through turbine blades 46 between a blade platform (not shown) and BOAS 40 the flow of combustion gases 40 impinges upon rotor blade 46 causing the rotor stage to rotate about engine center line axis 12 (FIG. 1). BOAS 40 is mounted just radially outward from rotor blade 46 tip and provides a seal against combustion gases 34 radially bypassing rotor blade 46. The flow of combustion gases 34 exits rotor stage and enters stator vane stage passing vane 44B.

Engine case 42 and other components including vane platforms 43A and 43B form plenums that can be used to communicate cooling air A to various components including BOAS 40, and in some embodiments, vanes 44A and 44B. Generally, cooling air A is supplied to plenums from a source such as high-pressure stage 18 and/or intermediate pressure stage of compressor (FIG. 1). Cooling air A passes through components such as BOAS 40 via passages (not shown) to provide for convection cooling. Thus, cooling air A provides desired cooling in order to increase the operational life of BOAS 40.

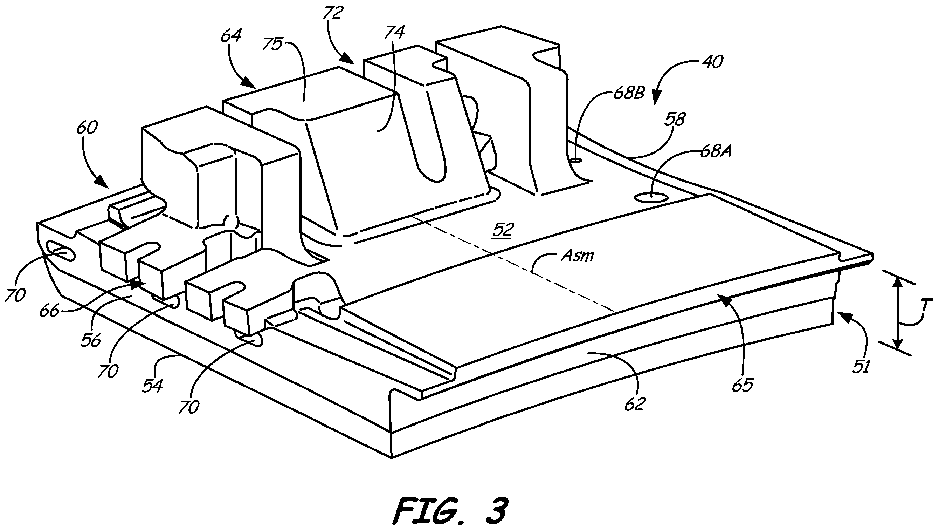

FIG. 3 provides a perspective view of BOAS 40. BOAS 40 includes a wall 51, an outer diameter surface 52, an inner diameter surface 54, a first side surface 56, a second side surface 58, a forward surface 60, an aft surface 62, a forward hooks 64, an aft hook 65, lateral hooks 66, holes 68A and 68B, a slot 72, an angled wall 74 and a outer radial hook surface 75.

Wall 51 of BOAS 40 has outer diameter surface 52, which extends between first side surface 56 and second side surface 58 and between forward hooks 64 and aft hooks 65. Wall 51 has a total radial thickness T between outer diameter surface 52 and inner diameter surface 54. Thickness T of wall 51 can vary from embodiment to embodiment, and can include a bond coat and/or a thermal barrier coating.

Inner diameter surface 54 is disposed on an opposing side of wall 51 from outer diameter surface 52. Inner diameter surface 54 extends between first side surface 56 and second side surface 58 and between forward surface 60 and aft surface 62. When BOAS 40 is installed in gas turbine engine 10 (FIG. 1), inner diameter surface 54 interfaces with and forms the outer diameter of the engine flow path through which combustion gases 34 pass (FIGS. 1 and 2). As will be discussed subsequently, in some embodiments inner diameter surface 54 is formed by application of bond coat and thermal barrier coating.

First and second side surfaces 56 and 58 are disposed to either lateral side of BOAS 40. First and second side surfaces 56 and 58 intersect with forward surface 60. Forward surface 60 is disposed axially forward (with respect to direction of flow of the combustion gases 34 through engine flow path) of forward hooks 64.

First and second side surfaces 56 and 58 also intersect with aft surface 62, which extends radially inward of aft hook 65. Aft hook 65 extends from wall 51 and is adapted to be received in a recess in vane platform 43B (FIG. 2). Similarly, forward hooks 64 extend radially outward and forward from wall 51 and are adapted to be received in BOAS support 48 (FIG. 2). Lateral hooks 66 extend radially outward from both wall 51 and forward hooks 64 over first side surface 56. Lateral hooks 66 overlap adjacent BOAS (not shown) when assembled.

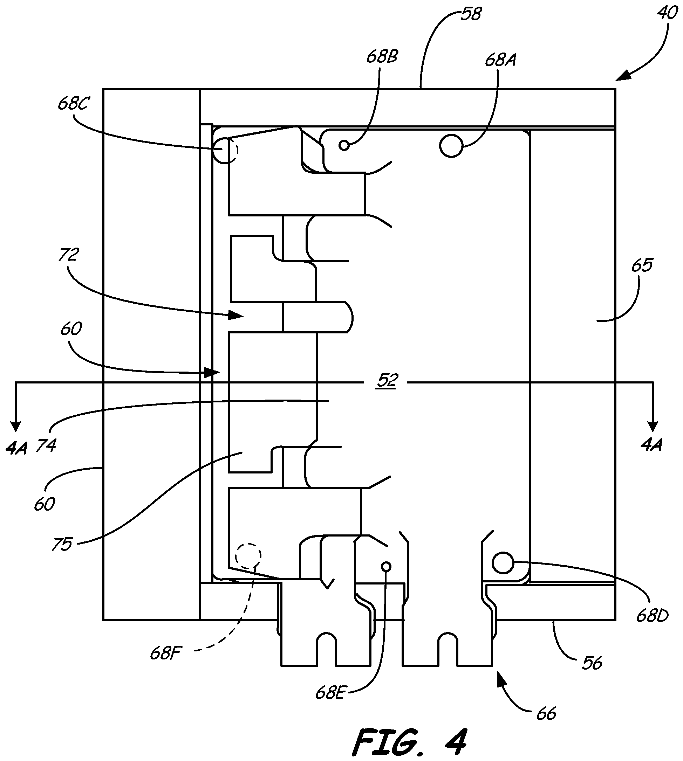

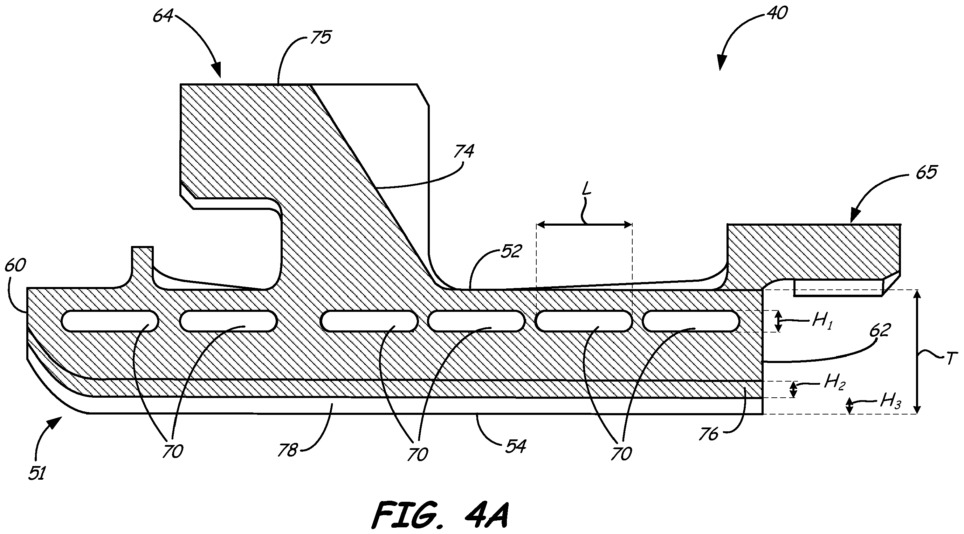

Holes 68A and 68B (other holes not shown) are formed in wall 51 and extend through outer diameter surface 52 adjacent second side surfaces 58. Holes 68A and 68B communicate with passages (FIG. 4A), which extend generally laterally through wall 51 from first side surface 56 to second side surface 58. As will be discussed subsequently, holes, including holes 68A and 68B, are sized to allow for the passage of optimal amounts of cooling air A (FIG. 2) into and through BOAS 40 in order to increase the operational life of BOAS 40.

In the embodiment shown in FIG. 3, forward hooks 64 are separated by slots including slot 72. Slot 72 is offset relative to a lateral axis of symmetry A_{SM} of BOAS 40. Thus, BOAS 40, including forward hooks 64, has an asymmetric design in the lateral direction. Once assembled in gas turbine engine 10 (FIG. 1), slot 72 receives an anti-rotation feature (not shown) of BOAS support 48 (FIG. 2). Slot 72 and anti-rotation feature prevent lateral movement (movement circumferentially around rotor stage within circumferential engine case 42) of BOAS 40.

Angled wall 74 extends radially and axially from outer radial hook surface 75 to connect to outer diameter surface 52 of wall 51. Angled wall 74 provides for ease of identification of BOAS 40 during assembly and disassembly processes.

FIG. 4 shows a plane view of the outer diameter of BOAS 40. FIG. 4A shows a cross-sectional view of BOAS 40. As illustrated in FIGS. 4 and 4A, BOAS 40 includes outer diameter surface 52, inner diameter surface 54 (FIG. 4A), first side surface 56 (FIG. 4), second side surface 58 (FIG. 4), forward surface 60, aft surface 62, forward hooks 64, aft hook 65, lateral hooks 66 (FIG. 4), slot 72 (FIG. 4), passages 70 (FIGS. 3 and 4A), angled wall 74 and outer radial hook surface 75. In addition to holes 68A and 68B, FIG. 4 illustrates holes 68C, 68D, 68E, and 68F. FIG. 4A illustrates a bond coat 76 and a thermal barrier coating 78.

As illustrated in FIG. 4, holes 68A, 68B, and 68C extend through outer diameter surface 52 adjacent second side surface 58 and holes 68D, 68E, and 68F extend through outer diameter surface 52 adjacent first side surface 56. As discussed, holes 68A, 68B 68C, 68D, 68E, and 68F communicate with passages 70 (FIGS. 3 and 4A). Holes 68A, 68B 68C, 68D, 68E, and 68F having varying diameters and are sized to allow for the passage of optimal amounts of cooling air A (FIG. 2) into and through BOAS 40 in order to increase the operational life of BOAS 40. Thus, in one embodiment each hole 68A, 68B 68C, 68D, 68E, and 68F has an area between about 0.005% and 0.45% of the surface area of BOAS 40 (as measured along a plane extending between first side surface 56, second side surface 58, forward surface 60, and aft surface 62). In a further embodiment each hole 68A, 68B 68C, 68D, 68E, and 68F has an area between about 0.020% and 0.30% of the surface area of BOAS 40 (as measured along a plane extending between first side surface 56, second side surface 58, forward surface 60, and aft surface 62).

As shown in FIG. 4A, in one embodiment each passage 70 has a radial height H₁ that comprises between about 30% to 40% of the total radial thickness T of wall 51. Passages 70 axial length L in total (between all six passages) comprises between about 75% and 85% of the axial length of BOAS 40 between forward surface 60 and aft surface 62.

FIG. 4A additionally shows bond coat 76, which is added to the wall 51. In one embodiment, bond coat 76 comprises a metallic coating that provides for increased oxidation and corrosion resistance. Bond coat 76 can be a nickel alloy layer applied using plasma or high velocity oxy-fuel deposition processes. In one embodiment, bond coat 76 has a radial thickness H₂ between about 3% and 10% of the total radial thickness T of wall 51.

Thermal barrier coating 78 can be applied to bond coat 76 to form inner radial surface 52. In one embodiment, thermal barrier coating comprises a ceramic layer that simultaneously provides thermal insulation and abradability and has a thickness H₃ between about 3% and 10% of the total radial thickness T of wall 51. The thermal bearing coating 78 can be applied using plasma deposition or other known methods.

BOAS 40 can be constructed of metallic material such as a nickel base alloy that offers high temperature strength and hot corrosion resistance. In one embodiment, BOAS 40 is formed of a single crystal alloy that is cast and directionally solidified. The alloy can additionally be heat treated at various temperature ranges for varying durations as desired.

The present invention provides a BOAS design with higher convective efficiency and with improved durability due to improved corrosion and oxidation resistance. More particularly, the BOAS described herein utilizes optimally sized holes in an outer diameter surface of a wall and optimally sized passages within the wall to better control cooling air flow through the BOAS and thereby improve convective efficiency of the BOAS. These features improve the operational longevity of the BOAS. Additionally, the BOAS is adapted with features such as a non-symmetric slot and an angled hook wall that extends radially and axially to aid in assembly of the BOAS within a gas turbine engine.

### Discussion of Possible Embodiments

The following are non-exclusive descriptions of possible embodiments of the present invention.

A blade outer air seal for a gas turbine engine includes a first side surface, a second side surface, and a wall. The wall extends between the first side surface and the second side surface and has one or more holes formed therein. The holes are spaced from the first side surface and/or the second side surface and have areas between about 0.005% and 0.450% of a surface area of the blade outer air seal.

The blade outer air seal of the preceding paragraph can optionally include, additionally and/or alternatively, any one or more of the following features, configurations and/or additional components.

The one or more holes have areas between about 0.02% and 0.30% of a surface area of the blade outer air seal.

The one or more holes comprise six holes with three holes positioned adjacent the first side surface and three holes positioned adjacent the second side surface.

Internal passages extend through the wall from the first side surface to the second side surface, and wherein the one or more holes communicate with the internal passages.

The six holes comprise one hole for each of the internal passages.

Each of the internal passages has a radial height between 30% to 40% of an total radial thickness the wall.

The internal passages together have an axial length that comprises between 75% and 85% of the axial length of the wall.

One or more forward hooks extend from the wall, and at least one of the forward hooks has a slot therein that is offset relative to an axis of symmetry of the blade outer air seal.

At least one of the forward hooks has an angled wall that extends from an outer radial surface of the at least one of the forward hooks to the wall.

The wall includes a bond coat, wherein the bond coat has a radial thickness between 3% and 10% of the total radial thickness of the wall.

The wall has a thermal barrier coating applied to an inner radial surface thereof, wherein the thermal barrier coating has a radial thickness between 3% and 10% of the total radial thickness of the wall.

A blade outer air seal for a gas turbine engine includes a first side surface, a second side surface, and a wall. The wall extends between the first side surface and the second side surface and has a bond coat and a thermal barrier coating. Both the bond coat and the thermal barrier coating have a radial thickness between 3% and 10% of the total radial thickness of the wall.

The blade outer air seal of the preceding paragraph can optionally include, additionally and/or alternatively, any one or more of the following features, configurations and/or additional components.

One or more holes are formed in the wall and are spaced from at least one of the first side surface or second side surface, and the one or more holes have areas between about 0.005% and 0.450% of a surface area of the blade outer air seal;

One or more holes are formed in the wall and are spaced from at least one of the first side surface or second side surface, and the one or more holes have areas between about 0.020% and 0.30% of a surface area of the blade outer air seal;

The one or more holes comprise six holes with three holes positioned adjacent the first side surface and three holes positioned adjacent the second side surface.

Internal passages that extend through the wall from the first side surface to the second side surface, and the one or more holes communicate with the internal passages.

Each of the internal passages has a radial height between 30% to 40% of an total radial thickness the wall.

The internal passages together have an axial length that comprises between 75% and 85% of the axial length of the wall.

One or more forward hooks extend from the wall, wherein at least one of the forward hooks has a slot therein that is offset relative to an axis of symmetry of the blade outer air seal; and

At least one of the forward hooks has an angled wall extends from an outer radial surface of the at least one of the forward hooks to the wall.

A blade outer air seal for a gas turbine engine includes a first side surface, a second side surface, a wall, and one or more forward hooks. The one or more forward hooks extend from the wall and at least one of the hooks has a slot therein that is offset relative to an axis of symmetry of the blade outer air seal.

The blade outer air seal of the preceding paragraph can optionally include, additionally and/or alternatively, any one or more of the following features, configurations and/or additional components.

At least one of the forward hooks has an angled wall that extends from an outer radial surface of the at least one of the forward hooks to the wall.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A blade outer air seal (40) for a gas turbine engine (10), the blade outer air seal (40) comprising:
a first side surface (56);
a second side surface (58);
a wall (51) extending between the first side surface (56) and the second side surface (58), wherein one or more holes (68A-68F) are formed in the wall (51) and are spaced from at least one of the first side surface (56) or second side surface (58), and each of the one or more holes (68A-68F) has an area between about 0.005% and 0.450% of a surface area of the blade outer air seal (40); and
one or more forward hooks (64) that extend from the wall (51), **characterised in that** at least one of the forward hooks (64) has a slot (72) therein that is offset relative to an axis of symmetry (Aₛₘ) of the blade outer air seal (40).

2. The blade outer air seal of claim 1, wherein the wall (51) has a thermal barrier coating (78) applied to an inner radial surface (52) thereof, and the thermal barrier coating (78) has a radial thickness (H₃) between 3% and 10% of a total radial thickness (T) of the wall (51), wherein the wall (51) includes a bond coat (76), and wherein the bond coat (76) has a radial thickness (H₂) between 3% and 10% of a total radial thickness (T) of the wall (51).

3. The blade outer air seal of claim 1 or 2, further comprising internal passages (70) that extend through the wall (51) from the first side surface (56) to the second side surface (58), and wherein the one or more holes (68A-68F) communicate with internal passages (70).

4. The blade outer air seal of claim 3, wherein the one or more holes (68A-68F) comprise six holes (68A-68F) with one hole (68A-68F) for communicating with each one of the internal passages (70).

5. The blade outer air seal of claim 3 or 4, wherein each of the internal passages (70) has a radial height (H₃) between 30% to 40% of a total radial thickness (T) the wall (51).

6. The blade outer air seal of claim 3, 4 or 5, wherein the internal passages (70) together have an axial length (L) that comprises between 75% and 85% of the axial length of the wall (51).

7. The blade outer air seal of any preceding claim, wherein each of the one or more holes (68A-68F) has an area between about 0.02% and 0.30% of a surface area of the blade outer air seal (40).

8. The blade outer air seal of any preceding claim, wherein the one or more holes (68A-68F) comprise six holes with three holes positioned adjacent the first side surface (56) and three holes positioned adjacent the second side surface (58).

9. The blade outer air seal of claim 1, wherein at least one of the forward hooks (64) has an angled wall that extends from an outer radial surface (75) of the at least one of the forward hooks (64) to the wall (51).

## Patentansprüche

1. Außenluftdichtung für eine Turbinenschaufel (40) für ein Gasturbinentriebwerk (10), wobei die Außenluftdichtung für eine Turbinenschaufel (40) Folgendes umfasst:
eine erste Seitenfläche (56);
eine zweite Seitenfläche (58);
eine Wand (51), die sich zwischen der ersten Seitenfläche (56) und der zweiten Seitenfläche (58) erstreckt, wobei ein oder mehrere Löcher (68A-68F) in der Wand (51) ausgebildet sind und von mindestens einer von der ersten Seitenfläche (56) oder zweiten Seitenfläche (58) beabstandet sind und jedes des einen oder der mehreren Löcher (68A-68F) eine Fläche zwischen etwa 0,005 % und 0,450 % eines Flächeninhalts der Außenluftdichtung für eine Turbinenschaufel (40) aufweist; und
einen oder mehrere vordere Haken (64), die sich von der Wand (51) erstrecken, **dadurch gekennzeichnet, dass** mindestens einer der vorderen Haken (64) einen Spalt (72) darin aufweist, der in Bezug auf eine Symmetrieachse (Aₛₘ) der Außenluftdichtung für eine Turbinenschaufel (40) versetzt ist.

2. Außenluftdichtung für eine Turbinenschaufel nach Anspruch 1, wobei die Wand (51) eine Wärmedämmschicht (78) aufweist, die auf eine innere Radialfläche (52) davon aufgetragen ist, und die Wärmedämmschicht (78) eine radiale Dicke (H₃) zwischen 3 % und 10 % einer radialen Gesamtdicke (T) der Wand (51) aufweist, wobei die Wand (51) eine Haftschicht (76) beinhaltet und wobei die Haftschicht (76) eine radiale Dicke (H₂) zwischen 3 % und 10 % einer radialen Gesamtdicke (T) der Wand (51) aufweist.

3. Außenluftdichtung für eine Turbinenschaufel nach Anspruch 1 oder 2, ferner umfassend innere Durchgänge (70), die sich von der ersten Seitenfläche (56) zu der zweiten Seitenfläche (58) durch die Wand (51) erstrecken, und wobei das eine oder die mehreren Löcher (68A-68F) mit inneren Durchgängen (70) kommunizieren.

4. Außenluftdichtung für eine Turbinenschaufel nach Anspruch 3, wobei das eine oder die mehreren Löcher (68A-68F) sechs Löcher (68A-68F) umfassen, wobei ein Loch (68A-68F) zum Kommunizieren mit jedem einzelnen der inneren Durchgänge (70) dient.

5. Außenluftdichtung für eine Turbinenschaufel nach Anspruch 3 oder 4, wobei jeder der inneren Durchgänge (70) eine radiale Höhe (H₃) zwischen 30 % bis 40 % einer radialen Gesamtdicke (T) der Wand (51) aufweist.

6. Außenluftdichtung für eine Turbinenschaufel nach Anspruch 3, 4 oder 5, wobei die inneren Durchgänge (70) gemeinsam eine axiale Länge (L) aufweisen, die zwischen 75 % und 85 % der axialen Länge der Wand (51) umfasst.

7. Außenluftdichtung für eine Turbinenschaufel nach einem der vorhergehenden Ansprüche, wobei jedes des einen oder der mehreren Löcher (68A-68F) eine Fläche zwischen etwa 0,02 % und 0,30 % eines Flächeninhalts der Außenluftdichtung für eine Turbinenschaufel (40) aufweist.

8. Außenluftdichtung für eine Turbinenschaufel nach einem der vorhergehenden Ansprüche, wobei das eine oder die mehreren Löcher (68A-68F) sechs Löcher umfassen, wobei drei Löcher benachbart zu der ersten Seitenfläche (56) positioniert sind und drei Löcher benachbart zu der zweiten Seitenfläche (58) positioniert sind.

9. Außenluftdichtung für eine Turbinenschaufel nach Anspruch 1, wobei mindestens einer der vorderen Haken (64) eine abgewinkelte Wand aufweist, die sich von einer äußeren Radialfläche (75) des mindestens einen der vorderen Haken (64) zu der Wand (51) erstreckt.

## Revendications

1. Joint à air externe de pale (40) pour un moteur de turbine à gaz (10), le joint à air externe de pale (40) comprenant :
une première surface latérale (56) ;
une deuxième surface latérale (58) ;
une paroi (51) s'étendant entre la première surface latérale (56) et la deuxième surface latérale (58), dans lequel un ou plusieurs trous (68A-68F) sont formés dans la paroi (51) et sont espacés d'au moins une parmi la première surface latérale (56) ou la deuxième surface latérale (58), et chacun des un ou plusieurs trous (68A-68F) a une aire entre environ 0,005 % et 0,450 % d'une surface du joint à air externe de pale (40) ; et
un ou plusieurs crochets avant (64) qui s'étendent de la paroi (51),
**caractérisé en ce qu'**au moins un des crochets avant (64) a une fente (72) à l'intérieur qui est décalée par rapport à un axe de symétrie (Aₛₘ) du joint à air externe de pale (40) .

2. Joint à air externe de pale selon la revendication 1, dans lequel la paroi (51) a un revêtement barrière thermique (78) appliqué à une surface radiale interne (52) de celle-ci, et le revêtement barrière thermique (78) a une épaisseur radiale (H₃) entre 3 % et 10 % d'une épaisseur radiale totale (T) de la paroi (51), dans lequel la paroi (51) comprend une couche de liaison (76), et dans lequel la couche de liaison (76) a une épaisseur radiale (H₂) entre 3 % et 10 % d'une épaisseur radiale totale (T) de la paroi (51).

3. Joint à air externe de pale selon la revendication 1 ou 2, comprenant en outre des passages internes (70) qui s'étendent à travers la paroi (51) de la première surface latérale (56) à la deuxième surface latérale (58), et dans lequel les un ou plusieurs trous (68A-68F) communiquent avec des passages internes (70).

4. Joint à air externe de pale selon la revendication 3, dans lequel les un ou plusieurs trous (68A-68F) comprennent six trous (68A-68F) avec un trou (68A-68F) pour communiquer avec chacun des passages internes (70).

5. Joint à air externe de pale selon la revendication 3 ou 4, dans lequel chacun des passages internes (70) a une hauteur radiale (H₃) entre 30 % à 40 % d'une épaisseur radiale totale (T) de la paroi (51) .

6. Joint à air externe de pale selon la revendication 3, 4 ou 5, dans lequel les passages internes (70) ont ensemble une longueur axiale (L) qui est comprise entre 75 % à 85 % de la longueur axiale de la paroi (51).

7. Joint à air externe de pale selon une quelconque revendication précédente, dans lequel chacun des un ou plusieurs trous (68A-68F) a une aire entre environ 0,02 % et 0,30 % d'une surface du joint à air externe de pale (40).

8. Joint à air externe de pale selon une quelconque revendication précédente, dans lequel les un ou plusieurs trous (68A-68F) comprennent six trous avec trois trous positionnés de manière adjacente à la première surface latérale (56) et trois trous positionnés de manière adjacente à la deuxième surface latérale (58).

9. Joint à air externe de pale selon la revendication 1, dans lequel au moins un des crochets avant (64) a une paroi inclinée qui s'étend d'une surface radiale externe (75) de l'au moins un des crochets avant (64) à la paroi (51).
